# EUROPEAN PATENT SPECIFICATION

(11) **EP 2 331 782 B1**
(45) Date of publication and mention of the grant of the patent: **28.11.2012**
(21) Application number: 09781461.0
(22) Date of filing: 04.08.2009
(51) Int. Cl.: E05F 11/38

(54) **WINDOW LIFT APPARATUS, DOOR MODULE, MOTOR VEHICLE DOOR AND METHOD FOR INSTALLATION OF A WINDOW LIFT APPARATUS**
FENSTERHEBEVORRICHTUNG, TÜRMODUL, KRAFTFAHRZEUGTÜR UND VERFAHREN ZUM EINBAU EINER FENSTERHEBEVORRICHTUNG
APPAREIL LÈVE-VITRES, MODULE DE PORTIÈRE, PORTIÈRE DE VÉHICULE MOTORISÉ ET PROCÉDÉ POUR L'INSTALLATION D'UN APPAREIL LÈVE-VITRES

(30) Priority: 01.10.2008 US 243293
(43) Date of publication of application: 15.06.2011
(73) Proprietor: Faurecia Innenraum Systeme GmbH, 76767 Hagenbach (DE)
(72) Inventor: MANGOLD, Claus, 34298 Helsa St. Ottilien (DE); HUEGE, Carsten, 37287 Wehretal (DE); BOECKER, Frank, 58089 Hagen (DE); HERMANN, Marko, 37269 Eschwege (DE); SCHLIWA, Enrico, 99819 Lauchröden (DE)
(74) Representative: Richardt Patentanwälte GbR
(86) International application number: PCT/EP2009/060080
(87) International publication number: WO 2010/037585

(56) References cited:
- WO-A-2007/071629
- DE-A1-102004 017 645
- DE-A1-102006 030 238

## Description

### BACKGROUND

The invention concerns a window lift arrangement, a door module with a window lift arrangement, a motor vehicle door with a window lift arrangement, and a procedure for installation of a window lift arrangement.

The starting point of this invention is the window lift arrangement known from DE -10 2004 017 645 A1. Instruments for positioning and fixing the lifter to simplify the installation of a window pane are known from this. Included in the embodiment disclosed there are instruments for positioning and fixing the lifter by means of two support brackets [prisms], which are molded in one piece on the wall section, e.g. the door panel, and are used as lower stops for the lifter.

So-called trackless window lift arrangements, of the type mentioned in DE 10 2004 017 645 A1, which get by without a cam chain guide [guide rail] for the lifter, are also disclosed in DE 102 55 461 A1 and DE 10 2005 037 324.

A device for connecting a window pane with the lifter of a window lift by means of a snap connection is known from DE 195 05 624 C2.

A door panel, which is used as a support for various elements of a window lift, is known from DE 202 18 678 U1. The door panel has an opening for installing the window lift from the inside of the door.

### SUMMARY OF THE INVENTION

The invention provides for a window lift arrangement, a door module, a motor vehicle door, and a method of installing a window pane in the independent claims. Embodiments are given in the dependent claims.

The task which forms the basis of the invention is to create an improved window lift arrangement, an improved door module, an improved motor vehicle door with a window lift arrangement and a procedure for installation of a window lift ar rangement, in order to simplify the installation in particular of a window pane with a large glass drop.

In accordance with the invention, a window lift arrangement with a lifter for a window pane is created. The window lift arrangement has a door panel and positioning means for positioning the lifter in an installation position for installation of the window pane. A lifter is the part of a mechanism for raising and lowering a window that is engaged with the window. A lifter can also be referred to as a driver. A door panel is a panel mounted on the inside of a door upon which the mechanism for raising and lowering the window is mounted. The door panel can also be referred to as an inner door panel.

The positioning means can assume a first and a second position. In the first position, the positioning means define the installation position and in the second position the positioning means release a movement of the lifter for opening or closing the installed window pane. The positioning means is comprised of one or more positioning elements.

The design of the positioning means according to the invention has the advantage that the positioning means do not simultaneously define the maximum opening of the window pane, as is the case in DE 10 2004 017 645 A1. Rather, the positioning means can in principle be arranged anywhere desired along the traverse path of the lifter. This is of particular advantage for the installation of a window lift arrangement in which the window pane can be counter sunk completely or almost completely in the door. The degree of lowerability of the window pane in the motor vehicle door is also called the "glass drop", wherein a glass drop of 100% means that the window pane is completely lowerable.

In the case of a completely or almost completely lowerable window pane, the window pane does not protrude or almost does not protrude over the upper door trim in its completely opened position, which makes installation in the completely opened position rather difficult The invention, on the other hand, enables the positioning means to be arranged so that the window pane protrudes over the upper door trim in the installation position, even if it pertains to a window lift with a large glass drop, particularly a glass drop of 100%. In the installation position, therefore, the section of the window pane protruding over the upper door trim can be easily grasped, which makes installation considerably easier. This is achieved by mounting the positioning elements in a middle area of the door panel.

One or more of the positioning elements is removably mounted on the door panel and supports the lifter in the first position. Embodiments of the invention provide for the second position of one or more of the positioning elements as being completely removed from the door panel. The removal of the positioning elements is of great benefit because it reduces the weight of the automobile and improves its fuel economy.

In one embodiment of the invention, the positioning elements of have a surface in contact with the lifter in the first position. The surface of the positioning element and the lifter interlock to restrict the motion of the lifter while the positioning element is in the first position. Further, the surfaces are designed to automatically align themselves during assembly into the first position. These interlocking surfaces have the advantage of being and quick easy to assemble. This reduces the cost of labor for installing windows.

In one embodiment of the invention, the cable which is adapted to operate the lifter during normal operation functions as a positioning element in conjunction with the interlocking surfaces. The interlocking surfaces restrict the motion of the lifter, and the cable removes the remaining degrees of freedom of motion and completely defines the position of the lifter in the first position. The cable is a normal component of the window drive lift. This has the advantage that the cable does not need to be removed. This embodiment provides for a simplified design.

According to the invention, one or more of the positioning elements is buttressed in the first position by a protrusion extending out of the door panel. This has the advantage that a positioning element can be mounted in a hole in the door panel. The hole in which the positioning element is mounted will not need to support the full force exerted on the lifter during the installation of a window pane.

The positioning element is slideably engaged between the protrusion and the lifter. This has the advantage of making it easy to move the positioning element into the second position. The positioning element can simply be slid out of the door panel and placed into the second position.

The slideably engaged positioning element is held in place by a clipping means. This has the advantage that it is easy for an operator to move the positioning element into the second position. The clipping means can be unclipped and the positioning elements can simply be slid out of the first position.

In one embodiment of the invention, the positioning means is designed to absorb the force initiated for creating a snap-in connection between the lifter and the window pane. If this is not the case, a drive element such as a hauling rope or cable is attached to the lifter before installation of the window pane, if the window lift is designed as a cable pull window lift. In this case the hauling rope can absorb the force with which the window pane is pressed into the lifter for creating the snap-in connection.

In another aspect, the invention concerns a door module with a lift arrangement The door module is comprised of a lifter for a window pane, adoor panel, and positioning elements according to the invention.

In another aspect, the invention concerns a door module or a motor vehicle door with a window lift arrangement according to the invention. For example it pertains to a window lift arrangement without guide rails for the lifter and a relatively large glass drop, of almost 100% for example.

In another aspect, the invention concerns a procedure for installation of a window lift arrangement. For installation, the lifter is first positioned by bringing the positioning means into the first position. After the lifter is connected to the window pane, by snapping it or locking it into place. For example, the positioning means are brought into a second position, in which the movement of the lifter for opening or closing the installed window pane is released.

In another aspect, the positioning elements can be preinstalled into the door panel. This allows for a more rapid and efficient work flow. Additionally, one or more of the positioning elements can be removed from the first position and placed position by removing the positioning element from the door panel and placing it into a storage receptacle. This has the advantage that the positioning element is not within the automobile. This reduces the Weight and increases the fuel economy of the automobile. Placing the positioning element into a storage receptacle is an advantage because the positioning elements can be reused.

### BRIEF DESCRIPTION OF THE DRAWINGS

Embodiments of the invention with reference to the drawings are described in more detail below. The following are shown:
Figure 1 A schematic depiction of an embodiment of a motor vehicle door according to the invention,
Figure 2 A schematic diagram of an embodiment of the window lifting mechanism ,
Figure 3 A side view of an embodiment according to the invention of a door panel showing the lifter and positioning elements in the first position,
Figure 4 A side view showing the embodiment of a door panel of figure 4 installed in an embodiment of a motor vehicle door with an installed window pane shown from the exterior side of the door,
Figure 5 The same embodiment of a motor vehicle door, a door panel, a positioning means, and a window pane as shown in figure 4 viewed from the occupant side of the door,
Figure 6 A close up, perspective view of the same embodiment of a motor vehicle door, door panel, and window pane as shown in figure 4 showing the positioning elements and lifter in the first position from the occupant side,
Figure 7 The same close up, perspective view as was shown in figure 6 except viewed from a different angle,
Figure 8 A perspective view of the embodiment of the lifter shown in figures 4,
Figure 9 Perspective view of the embodiment of the positioning means shown in figure 5,
Figure 10 Top view of the embodiment of the positioning means shown in figure 5.
Figure 11 Side, perspective view of the embodiment of the positioning means shown in figure 5,
Figure 12 Front, perspective view of the embodiment of the positioning means shown in figure 5,
Figure 13 A close up, side, perspective view of the embodiment of the door panel shown in figure 5 as viewed from the occupant side of the door,
Figure 14 Close up, perspective view showing the positioning element and the lifter in the first position,
Figure 15 Cross sectional, side view showing the positioning element and the lifter in the first position,
Figure 16 Side view showing the positioning element and the lifter installed in the first position from the exterior side of the door.

### DETAILED DESCRIPTION OF THE INVENTION

In the following description of embodiments of the invention, elements that correspond to one another are identified with the same reference marks.

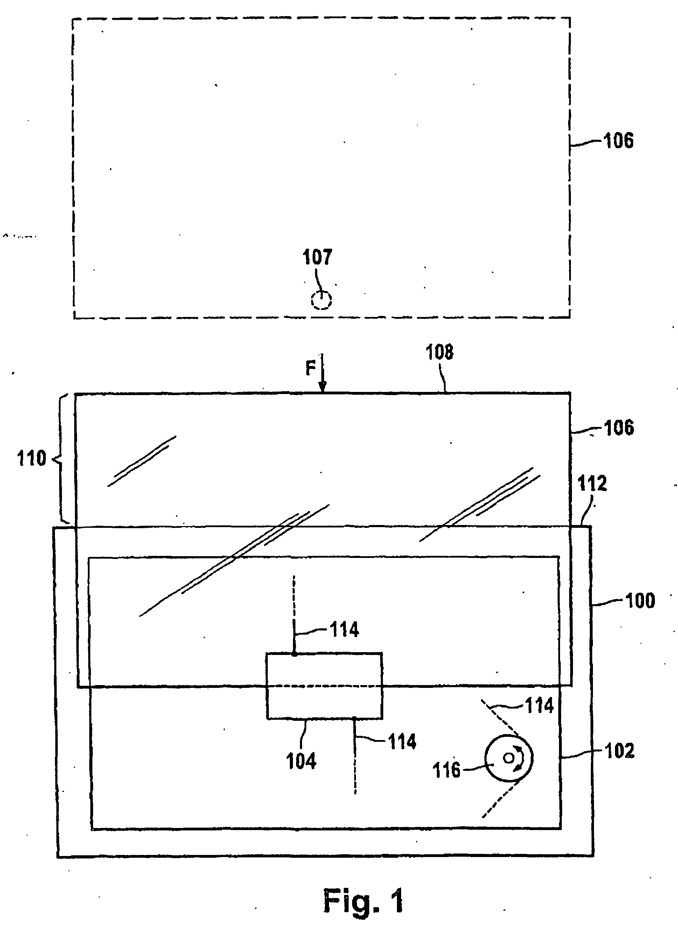

Figure 1 shows a motor vehicle door 100 with an door panel 102 Door panel 102 is used as a support, for example for various drive elements of a window lift arrangement. At the same time, the door panel can be used as a partition wall between a wet area and a dry area of motor vehicle door 100.

The window lift arrangement has a lifter 104 for connecting to a window pane 106. Positioning means are not shown in Figure 1, and are arranged on door panel 102 and/or lifter 104. The positioning means has a first position for determining an installation position for connecting window pane 106 and lifter 104, and a second position in which a movement of the lifter is released for opening or closing the installed window.

Figure 1 shows lifter 104 in its installation position, which in the embodiment of the window lift arrangement being observed here is located approximately in the middle of door panel 102 . After lifter 104 has been positioned in the installation position, window pane 106 is brought from above out of its position indicated by dotted lines to its installation position shown in solid lines. In the installation position, window pane 106 is connected to lifter 104, in that for example a force F is exerted on upper edge 108 of window pane 106, which causes lifter 104 and window pane 106 to engage in a snap-in connection. For example, window pane 106 may have a hole 107 on its lower edge for creating the snap-in connection with lifter 104.

Of particular advantage in the embodiment shown in Figure 1 is the fact that area 110 of window pane 106 in its installation position protrudes over upper door trim 112 of motor vehicle door 100. This enables easy installation of window pane 106 and in particular the initiation of force F.

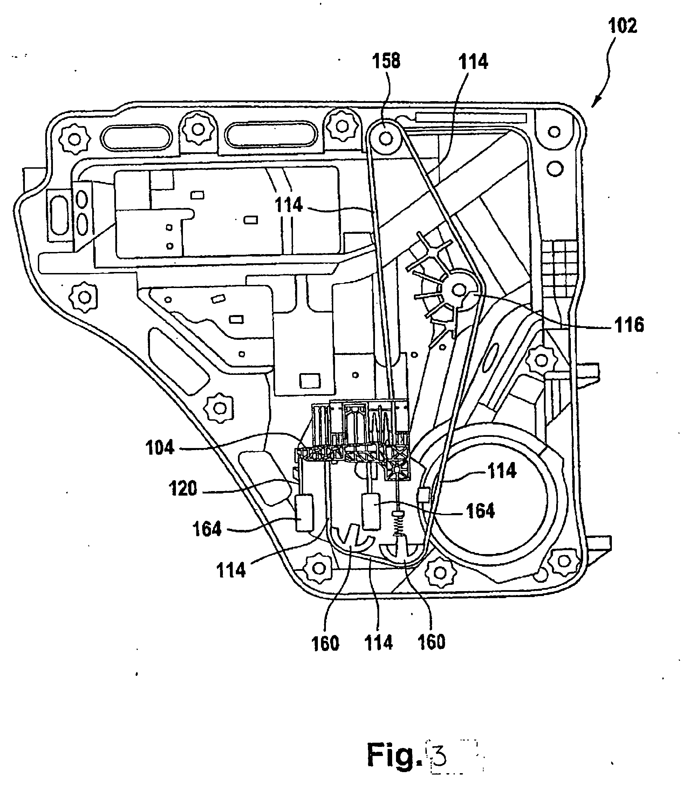

Before or after connecting window pane 106 and lifter 104, lifter 104 is connected to a drive element of the window lift arrangement. The drive element pertains, for example to a cable 114, which is guided via driving drum 116 of the window lift arrangement Force F exerted for creating the snap-in or snap connection between lifter 104 and window pane 106 is absorbed by the positioning element 120 (cf. figure 3) and/or cable 114.

The window lift arrangement of Figure 1 may pertain to an embodiment with a relatively large glass drop, such as a glass drop of 100% or almost 100%. This means that after installation, window pane 106 can be moved completely or almost completely under upper door trim 112 by activating the window lift arrangement, so that even area 110 ofwindow pane 106 disappears underneath upper door trim 112.

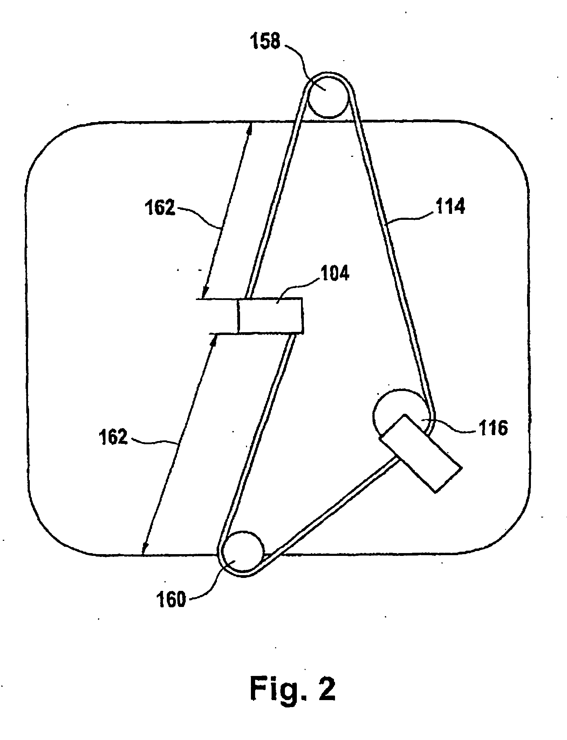

Fig. 2 shows a schematic diagram of an embodiment of a window lifting mechanism. In this embodiment the lifter 104 is driven by cables 114. Below the lifter 104 the cable is guided by the cable guide 160. Above the lifter the cable is guided by the upper pulley 158. And the cable is driven by the driving drum 116. When the cable is driven by the driving drum 116, the glass follows a clearly defined path 162.

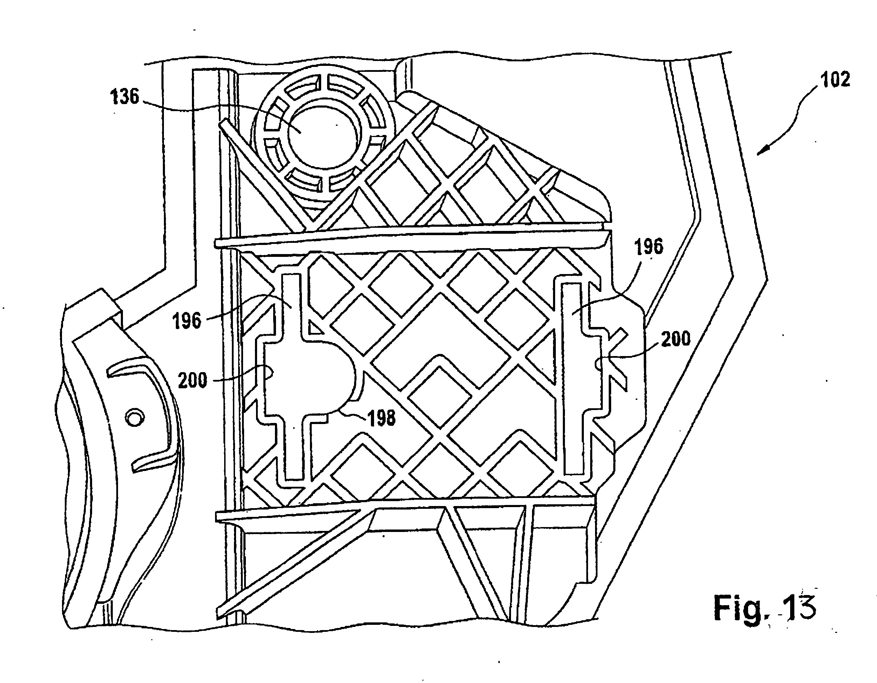

Figures 3 through 16 show the same embodiment of the invention. Components with identical numbers in these figures are identical components. In this embodiment, the positioning means 118 is comprised of a positioning element 120 and a cable 114. Figure 3 shows an exterior side view of a door panel. The door assembly 102 has a cable drive system 114 which moves the lifter 104. The cable above the lifter is guided by upper pulley 158. Bellow the lifter, the cable is guided by two cable guides 160. The positioning element 220 and the lifter 104 are shown in the first position. In this embodiment the cable 114 also functions as a positioning element. The lifter 104 rests on positioning element 120 and is held in place by the cable 114. The positioning element 120 is inserted through the door panel 102. It is not shown in this figure, but there are two slots 196 through which the positioning element is installed and it is held in place by a snap fit. This is shown in later figures (cf. figures 13). The cable is driven by the drive drum 116. The positioning element 120 rests on top of two protrusions 164. A particular advantage of this embodiment is that the position elements rest on top of the protrusions 164. This supports the positioning element during the assembly of the window and distributes the force over a larger area of the door panel.

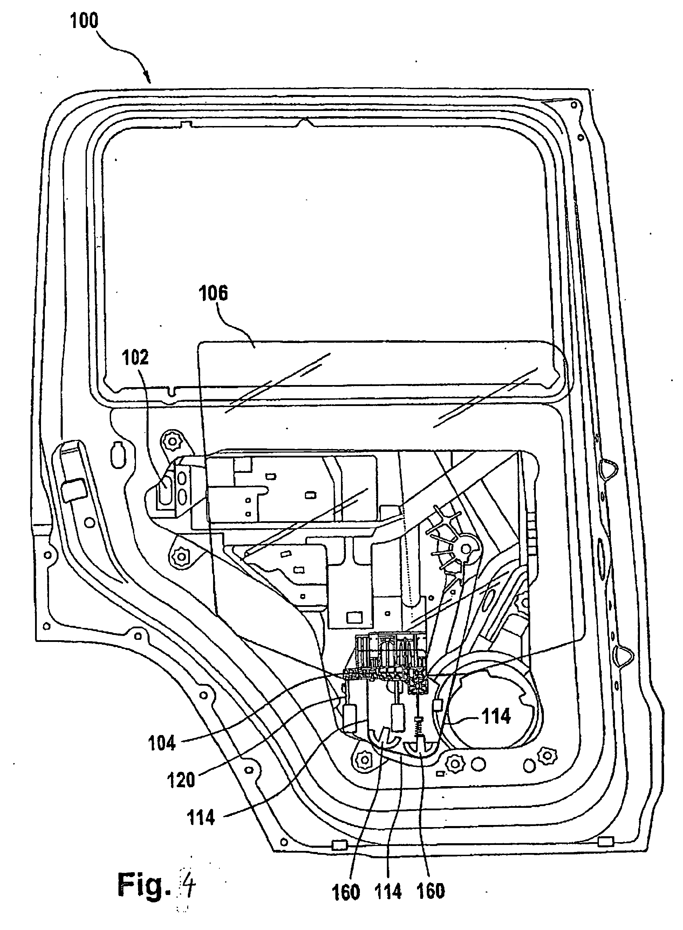

Figure 4 shows an exterior view of a complete motor vehicle door. The motor vehicle door 100 is comprised of a door panel 102. A window pane 106 is inserted into the lifter 104. Visible are the cable guides 160, the cable 114 and the lifter 104. The positioning means is in the first position and the window 106 is shown in an engaged position.

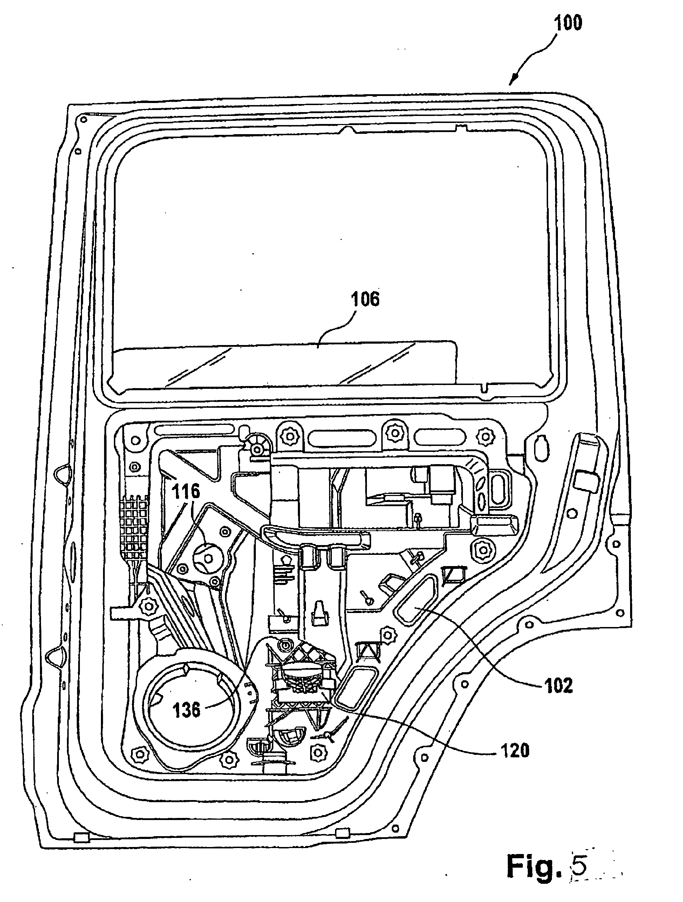

Figure 5 shows an interior side view of the same embodiment of the motor vehicle door as was shown in the previous figure. Visible in this figure is the motor vehicle door 100, the window pane 106, the driving drum 116, and the positioning element 120. The positioning element 120 is shown in the first position. Also visible is an installation hole 136. The purpose of the installation hole is to allow the snap element 144, which is not shown in this figure, to be released to allow the window to be removed. The door panel 102 is shown as being assembled into the complete motor vehicle door 100.

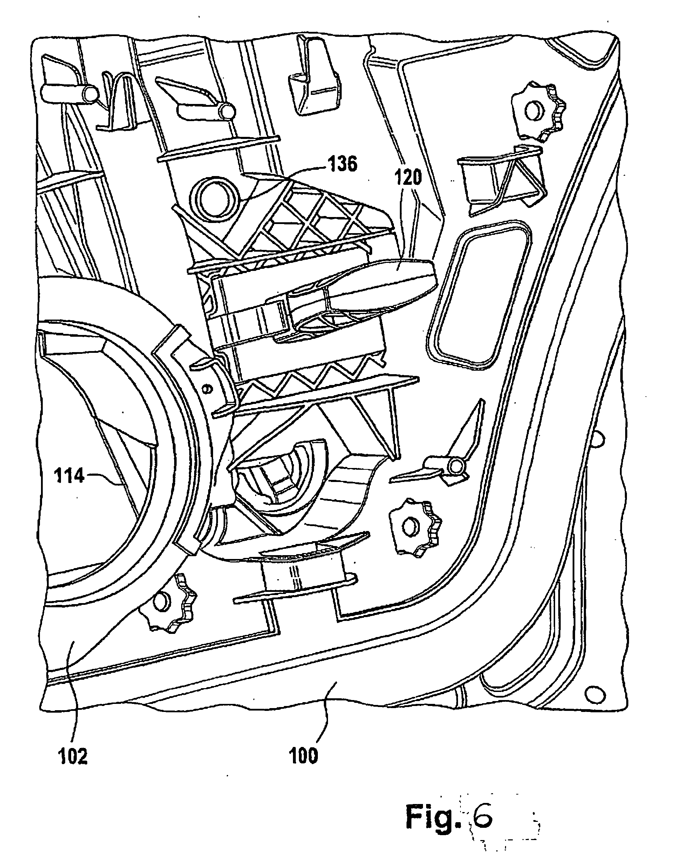

Figure 6 shows a close-up, perspective of the same motor vehicle door that was shown in the previous figure from the passenger side of the door. The door panel 102 is bolted into the motor vehicle door 100. Visible is the installation hole 136 which is located above the positioning element 120. Since this is a perspective view, a portion of the cable 114, which is mounted on the opposite side of the door, is also visible.

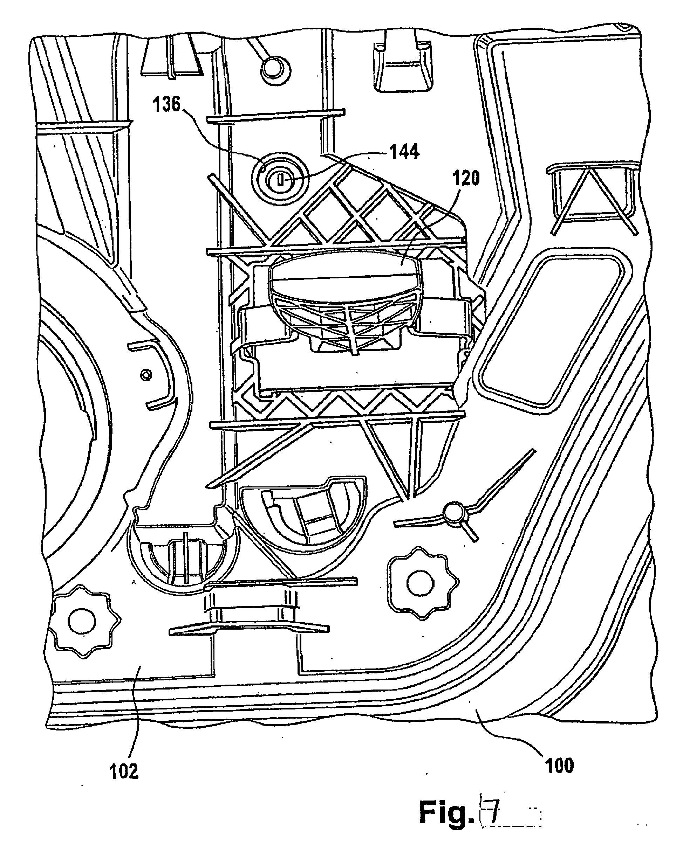

Figure 7 shows the same interior view of the motor vehicle door 100 as figure 6 but from a different angle. Again the door panel 102 is mounted on motor vehicle door 100. And again the installation hole 136 is visible above the positioning element 120. Visible through the installation hole 136 is the snap element 144. In this figure it is very clear that the snap element is accessible through this hole, and that the window can be released

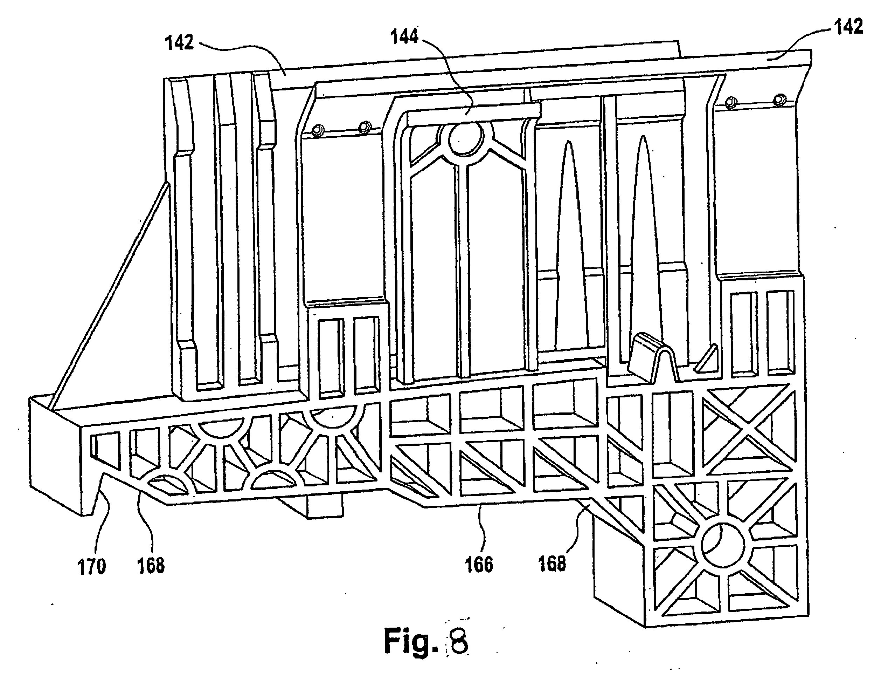

Figure 8 shows a perspective view of the lifter 104. On the upper part of the lifter 104, are two flanges 142. The purpose of the flanges is to secure and hold the window pane 106. The window pane 106 is not shown in this figure. The snap element 144, is used to lock into the hole 107 in the window pane. This locks the window in place when it is installed. On the underside of the lifter 104, there is a complex surface. The two sloped surfaces 168 serve to guide the lifter 104 into proper alignment with the positioning element 120. When in the first position, the lifter 104 and the positioning element have interlocking surfaces. There is an angled surface 170 on the lifter 104 which mates with an angled surface on the positioning element 120. There is also a flat surface 166 on the lifter 104 which mates with another flat surface 170 on the positioning element 120.

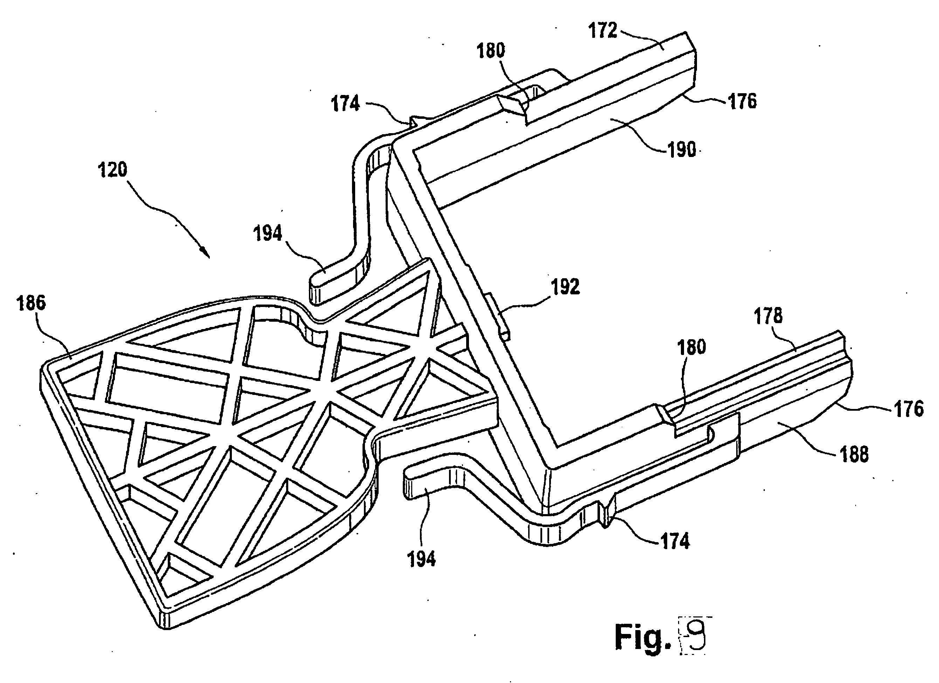

Figure 9 shows a perspective view of an embodiment of a positioning element 120. The positioning element 120 comprises a handle 186 with a first 188 and a second prong 190. Between the two prongs are installation stops 192. When the positioning element 120 is installed into the first position, these stops 192 define how far the positioning element goes into the door panel 102. Each of these prongs has a surface that interlocks with a surface on the lifter 104. The first prong 188 has an angled surface 178 that interlocks with a mating surface for the angled surface 170 on the lifter 104. The second prong 190 has a second flat surface that mates with a first flat surface 166 located on the lifter 104. Each prong 188, 190 also has a lifter stop which is used to partially define the position of the lifter when the positioning element is in the first position, On the side of each prong is a snap connector 174, which locks the positioning element 120 into the first position. The snap connector 174 can be released by depressing the snap connector release 194 in the direction of the handle. The edge surface of the prongs that is in contact with the protrusion features a tapered edge 176, which facilitates the removal of the positioning element from the first position. This is described in more detail below.

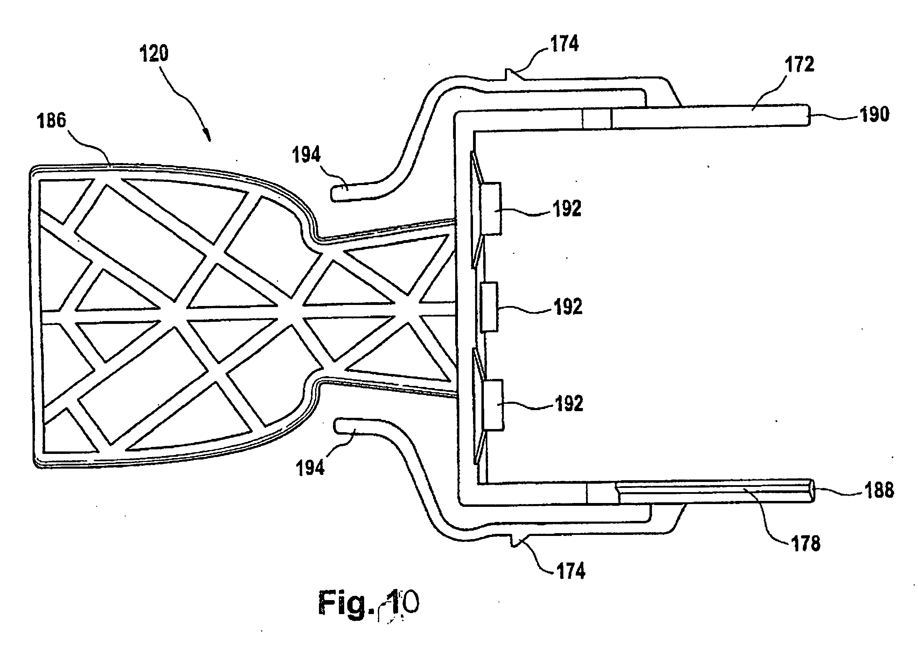

Figure 10 shows a top view of the same embodiment of a positioning elements that was shown in figure 9. In this view, the installation stops 192 are more easily visible.

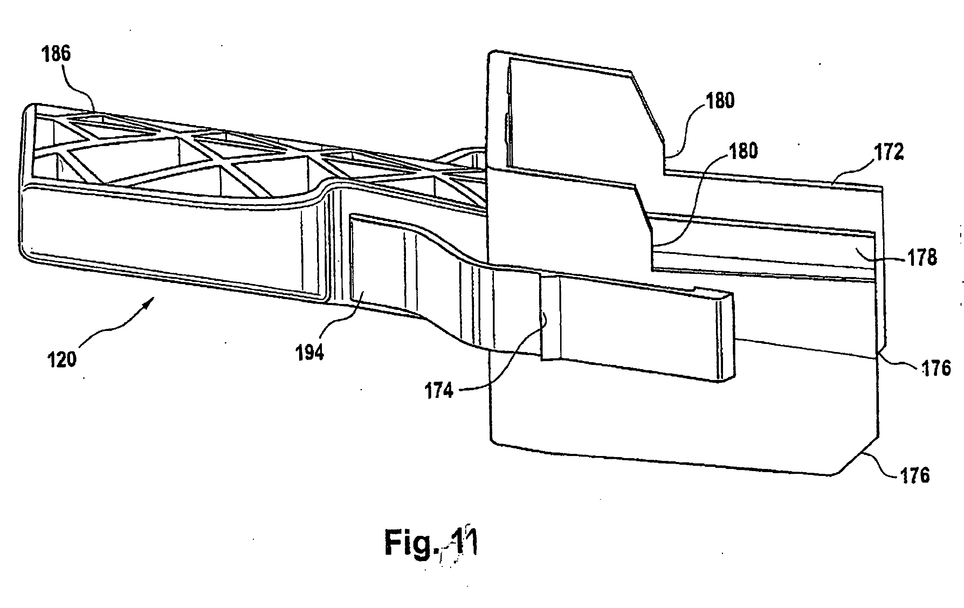

Figure 11 shows a side, perspective view of the same positioning element that was shown in figure 9.

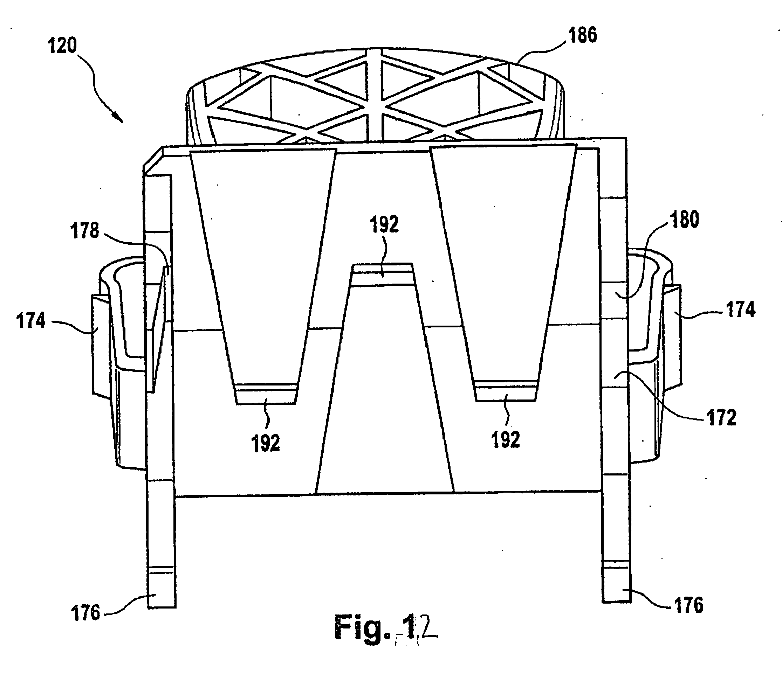

Figure 12 shows a front, perspective view of the same positioning element that was shown in figure 9.

Figure 13 shows a perspective view of a portion of an embodiment of a door panel 102 as viewed from the occupant side of the door. Visible in this figure are slots 196 for installing the positioning element 120. The prongs 188, 190 of the positioning element 120 are inserted into the slots 196. Each slot has a rectangular elongation 200 which provides clearance for the snap connector 174. When the positioning element 120 is fully inserted into the door panel 102, the snap connectors locks the positioning element 120 against the door panel 102. Above one of the slots, an installation hole 136 is visible. When the lifter and the positioning element 120 are in the first position, this hole provides access to the snap element 144. The snap element locks into the hole 107 in the window pane. Access to the snap element is necessary to release and remove the window pane 106. The slot 196 below the installation hole 136 has a circular elongation 198. The circular elongation 198 serves the same function as the installation hole 136. When the window is fully rolled down, the lifter 104 rests on the two protrusions 164. When the lifter is resting on the protrusions 164, the circular elongation provides access to the snap connector 174 in order to release the window pane 106. This additional access to the snap connector is provided in case a window needs to be replaced and the positioning element 120 is not available. The replacement of a window without the positioning element would be more difficult and more time consuming, but it would be possible for a skilled mechanic to perform.

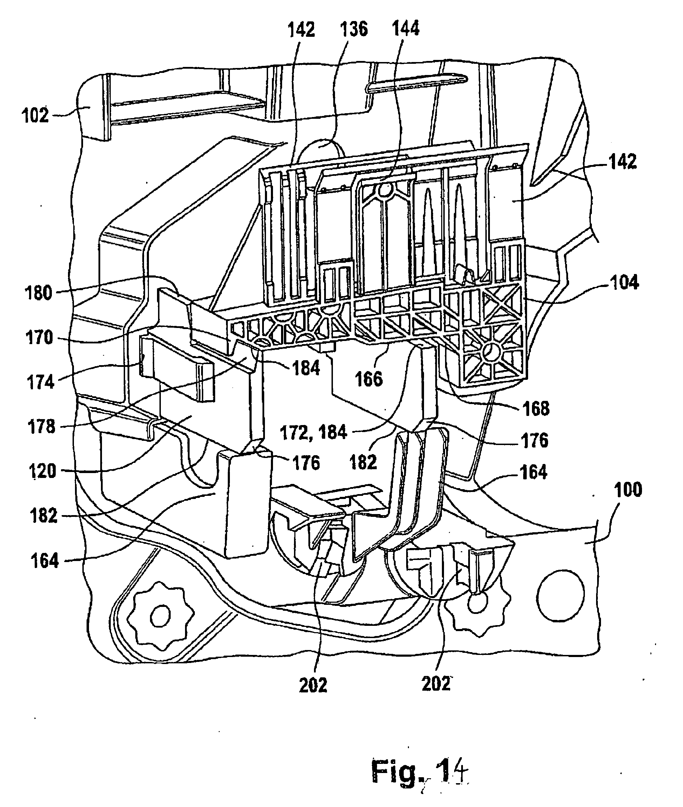

Figure 14 shows a perspective view of the motor vehicle door 100 and the door panel, the lifter 104 and the positioning element 120 in the first position. The perspective view shows in detail how this is assembled. The positioning element 120 is inserted through the door panel 102. It is held in place on each side by two snap connectors 174. The edge of the two prongs 188, 190 of the positioning element rest on two protrusions 164. By resting on these protrusions when the window is being installed and force is placed on the lifter 104, the force is transferred through the positioning element 120 to these protrusions 164. Above the lifter is visible the installation hole 136. It is shown in this figure that the installation hole 136 has direct access to the snap element 144 which is a component of the lifter 104. The lifter 104 is shown resting on top of the positioning element 120. The upper part of the positioning element 120 against the flanges 142 for holding the window pane are shown. Below the lifter and the positioning element 120 the two cable guides 160 are visible. A cable guide is a device which is operable for defining the position of a cable and upon which the cable is able to slide. Alternatively, in an another embodiment the cable guides could be replaced with pulleys.

Figure 14 also shows several more design features, the first of which is that the positioning element 120 is slideably removable from the door panel. To remove the positioning element an operator would depress the snap connectors releases 174 which are located near the base of the handle 186 of the positioning element 120. The positioning element 120, is then slid out of the door panel by the operator. This is able to be accomplished because of the surfaces in contact with the protrusions 164 are parallel with those surfaces which are in contact with the lifter 104. The surfaces in contact with the protrusions are labeled as the first parallel surfaces 182 and the surfaces which are in contact with the lifter are labeled as the second parallel surfaces 184. If these surfaces were not level they would form a wedge and it would require force to remove the positioning element 120 from the first position.

Also visible on both of the prongs 188, 190 is a tapered surface 176. The pur pose of this tapered surface 176 is that when the positioning element 120 is removed, the positioning element 120 clears the protrusions 164 more rapidly. As soon as the tapered surface clears the protrusion it becomes easier to remove the positioning element 120. To align the positioning element 120 and the lifter, they have interlocking surfaces. On the first prong 188 of the positioning element 120 is an angled surface 178, this mates with the mating surface for the angle surface 170 which is located on the lifter 104. The second prong 190 has a flat surface which corresponds to a flat surface 166 on the lifter. There is a lifter stop 180 located on both prongs 188, 190 of the positioning element 120. The lifter 104 butts up against the lifter stop. The cable is not shown in this figure but the cable pulls down and back and pulls the lifter against the positioning element and back against the lifter stop. The position of the cable below is controlled by two cable guides 160, which are not shown in this figure. However, the cable guide mounts 202 are shown. A cable guide mount is, as its name describes, a mounting for a cable guide. The combination of the surfaces on the lifter, the positioning element and the cable fully restrain the lifter in the first position.

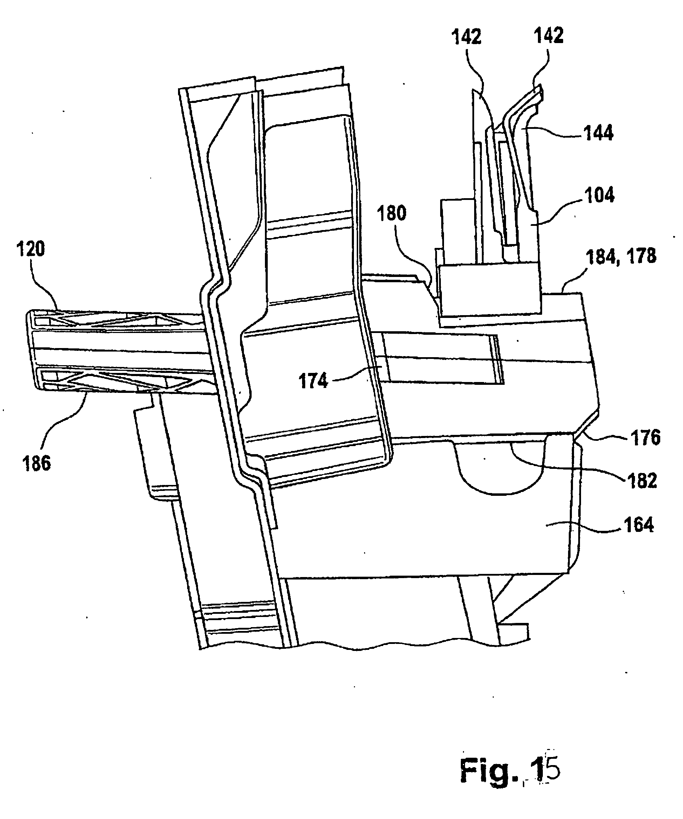

Figure 15 shows a cross-sectional side view of the positioning element and the lifter assembled in the door panel. In this figure it can be seen how positioning element 120 rests on the protrusion 164. It is also shown in this figure how the first parallel surface 182 is parallel to the second parallel surface 184. The positioning element 120 is resting on the protrusion 164 and the window lifter is resting on the positioning element 120. When the positioning element 120 is removed the operator depresses the snap connector release 194 and simply pulls on the handle of the positioning element 186. The positioning element is then able to be slid out and the lifter is released. The lifter stop 180 is also clearly visible in this figure The stop defines how far back the lifter 104 slides on the mating surfaces 174, 172 of the positioning element 120. The flanges 142 and the snap element 144 which hold the window in place on the lifter are clearly visible in this figure also.

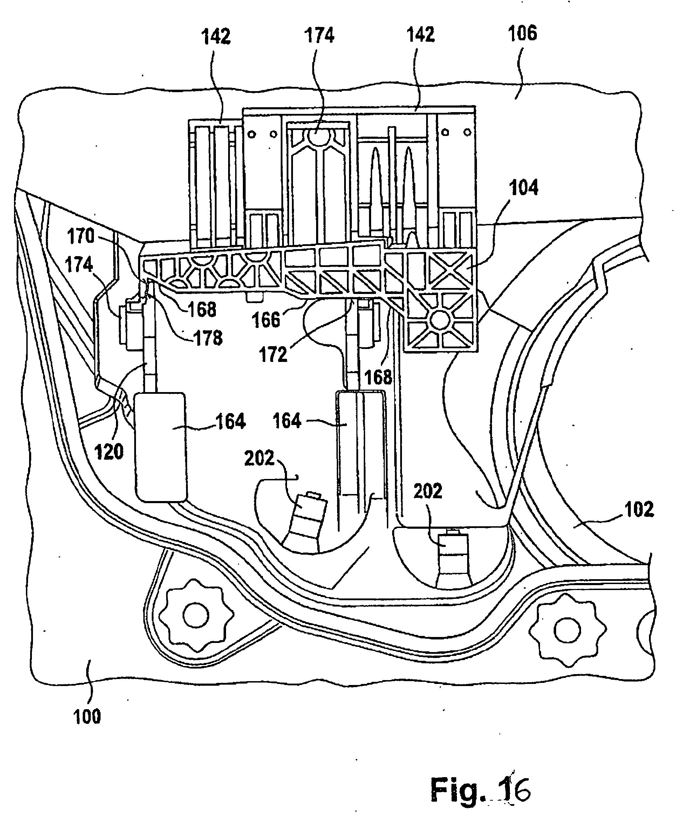

Figure 16 shows a closer view of the lifter 104 and the positioning element 120 in an assembled motor vehicle door 100. This is shown as an exterior view of the door. The window 106 is shown as being installed into the lifter 104. Below the positioning element the two cable guide mounts 202 are visible. The cable is not shown in this figure. This figure shows clearly how the lifter and the positioning element 120 are aligned. On the second prong 190, the flat surface 166 on the lifter is shown to be in contact with the flat surface on the positioning element 172. On the first prong 188, the angled surface 178 is shown as being in contact with the mating angled surface 170 on the lifter 104.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

### List of reference numerals

- 100: Motor vehicle door
- 102: door panel
- 104: Lifter
- 106: Window pane
- 107: Hole (in window pane)
- 108: Edge
- 110: Area
- 112: Upper door trim
- 114: Cable
- 116: Driving drum
- 118: Positioning means
- 120: Positioning element
- 136: Installation hole
- 142: Flanges
- 144: Snap element
- 150: Recess
- 158: Upper pulley
- 160: Cable guide
- 162: Movement of glass
- 164: Protrusion
- 166: Flat surface
- 168: Sloped surface
- 170: Mating surface for angled surface
- 172: Second flat surface
- 174: Snap connector
- 176: Tapered surface
- 178: Angled surface
- 180: Lifter stop
- 182: First parallel surface
- 184: Second parallel surface
- 186: Handle
- 188: First prong
- 190: Second prong
- 192: Installation stop
- 194: Snap connector release
- 196: Slot
- 198: Circular elongation
- 200: Rectangular elongation
- 202: Cable guide mount

## Claims

1. A window lift arrangement comprising:
- a lifter (104) for a window pane (106),
- a door panel (102), and
- a positioning means (120) for positioning the lifter (104) relative to the door panel (102) in an installation position for installation of the window pane (106),
wherein the positioning means is comprised of at least one positioning element (120), wherein the positioning element (120) can assure a first and a second position, wherein the positioning element (120) in the first position defines the installation position, wherein the positioning element (120) in the second position releases a movement of the lifter (104) for opening and closing the installed window pane (106),
wherein the positioning element (120), in the installation, is removably arranged in a middle area of the door panel (102) to support the lifter (104) in such a way that the window pane (106) protrudes beyond an upper door trim (112), and wherein the positioning element (120) is completely removed from the door panel (102) in the second position, and wherein the positioning element (120) is installable through the door panel (102), said window lift arrangement being **characterized in that** the positioning element (120) is buttressed in the first position by a protrusion (164) extending out of the door panel (102), wherein the positioning element (120) is slideably engaged between the protrusion (164) of the door panel (102) and the lifter (104), and wherein the positioning element (120) is held in the first position by a clipping means (174,194).

2. The window lift arrangement of Claim 1, wherein the one or more positioning elements are movably-mounted on the door panel (102) and are designed for removable fixing of the lifter (104) in the first position.

3. The window lift arrangement of Claim 1 or 2, wherein the positioning element features contact element (120) for removable fixing.

4. The window lift arrangement of any one of the preceding claims, wherein said positioning element has a surface (172, 178) in contact with a surface (166, 168,170) of the lifter (104) while in the first position, wherein the surface (172, 178) of the positioning element (120) in contact with the lifter (104) has a first profile, wherein the surface (166, 168, 170) of the lifter (104) in contact with the positioning element has a second profile, and wherein the first and second profiles are adapted to interlock automatically during assembly, and wherein the interlocking first and second profiles restrict the motion of the lifter (104) while in the first position.

5. The window lift arrangement of claim 4, wherein a cable (114) being adapted to operate the lifter (104) during normal operation functions as a second positioning element when the lifter (104) is the first position, and wherein the cable (114) and tne interlocking first and second profiles completely restrict the motion of the lifter (104) while in the first position.

6. The window lift arrangement of claim 1, wherein one or more surfaces (176) of the positioning element (120) that are slidably engaged with either the protrusion (164) or the lifter (104) slope rapidly away.

7. The window lift arrangement of any one of the preceding claims, wherein the one or more positioning elements are designed to absorb a force exerted for forming the snap-in connection between the window pane (106) and the lifter (104), and wherein the window lift arrangement features a glass drop of almost 100%.

8. A door module (102) with a window lift arrangement according to claim 1.

9. A motor vehicle door (100) with a window lift arrangement according to claim 1.

10. A method for installation of a window pane (106) in a window lift arrangement according to claim 1, comprising:
- positioning of a lifter (104) for the window pane (106) by means of a positioning means (120) in an installation position for the installation of window pane (106), wherein the positioning means (120) is comprised of at least one positioning element (120), wherein the positioning element (120) can assume a first and a second position, wherein the positioning element (120) in the first position define the installation position and positioning element (120) in the second position can release a movement of lifter (104) for opening or closing an installed window pane (106), wherein the positioning element (120) is buttressed in the first position by a protrusion (164) extending out of the door panel (102) wherein the positioning element is slideably engaged between the protrusion (164) and the lifter (104), wherein the positioning element (120) that is slideably engaged is held in the first position by a clipping means (174,194), and wherein the positioning element (120) is installable through the door panel (102),
- connecting the window pane (106) with the lifter (104) for the purpose of forming a connection, and
- moving the positioning element (120) into the second position, completely removed from the door panel (102).

11. The method of Claim 10, wherein the connection pertains to a snap-in connection, and a force is exerted on the window pane (106) so that the lifter (104) and window pane (106) snap lock together.

12. the method of Claim 10 or 11. wherein a drive element of the window lift is mounted on the lifter (104) before the lifter (104) is connected to the window pane (106).

13. The method of any one of claims 10 through 12, wherein one or more of the positioning elements (120) are preinstalled in the first position in a door panel (102), wherein one or more of the positioning elements (120) are placed into the second position by removing them from the door panel (102) and placing them in a storage receptacle.

## Patentansprüche

1. Fensterheberanordnung, die Folgendes aufweist:
- einen Mitnehmer (104) für eine Fensterscheibe (106),
- ein Türelement (102) und
- eine Positioniereinrichtung (120) zum Positionieren des Mitnehmers (104) im Verhältnis zum Türelement (102) in einer Einbauposition zum Einbauen der Fensterscheibe (106),
wobei die Positioniereinrichtung aus wenigstens einem Positionierelement (120) besteht, wobei das Positionierelement (120) eine erste und eine zweite Position einnehmen kann, wobei das Positionierelement (120) in der ersten Position die Einbauposition definiert, wobei das Positionierelement (120) in der zweiten Position eine Bewegung des Mitnehmers (104) zum Senken und Heben der eingebauten Fensterscheibe (106) freigibt, wobei das Positionierelement (120) in der Einbauposition in einem mittleren Bereich des Türelements (102) entfernbar angeordnet ist, um den Mitnehmer (104) so zu tragen, dass die Fensterscheibe (106) über eine obere Türverkleidung (112) hinaus vorsteht, und wobei das Positionierelement (120) in der zweiten Position vollständig aus dem Türelement (102) ausgebaut wird, und wobei das Positionierelement (120) durch das Türelement (102) eingebaut werden kann, wobei die genannte Fensterheberanordnung **dadurch gekennzeichnet ist, dass** das Positionierelement (120) in der ersten Position von einem Vorsprung (164), der sich aus dem Türelement (102) erstreckt, gestützt wird, wobei das Positionierelement (120) gleitfähig zwischen dem Vorsprung (164) des Türelements (102) und dem Mitnehmer (104) in Eingriff ist, und wobei das Positionierelement (120) durch eine Klammereinrichtung (174, 194) in der ersten Position gehalten wird.

2. Fensterheberanordnung nach Anspruch 1, wobei das eine oder die mehreren Positionierelement(e) beweglich an dem Türelement (102) montiert sind und für das entfernbare Fixieren des Mitnehmers (104) in der ersten Position ausgelegt sind.

3. Fensterheberanordnung nach Anspruch 1 oder 2, wobei das Positionierelement ein Kontaktelement (120) zum entfernbaren Fixieren aufweist.

4. Fensterheberanordnung nach einem der vorhergehenden Ansprüche, wobei das genannte Positionierelement eine Oberfläche (172, 178) hat, die mit einer Oberfläche (166, 168, 170) des Mitnehmers (102) in Kontakt ist, während er in der ersten Position ist, wobei die mit dem Mitnehmer (104) in Kontakt befindliche Oberfläche (172, 178) des Positionierelements (120) ein erstes Profil hat, wobei die mit dem Positionierelement in Kontakt befindliche Oberfläche (166, 168, 170) des Mitnehmers (104) ein zweites Profil hat und wobei das erste und das zweite Profil so ausgeführt sind, dass sie bei der Montage selbsttätig ineinandergreifen, und wobei das erste und zweite Profil, die ineinandergreifen, die Bewegung des Mitnehmers (104) einschränken, während er in der ersten Position ist.

5. Fensterheberanordnung nach Anspruch 4, wobei ein zum Betätigen des Mitnehmers (104) während des normalen Betriebs ausgeführtes Seil (114) als ein zweites Positionierelement fungiert, wenn der Mitnehmer (104) in der ersten Position ist, und wobei das Seil (114) und das erste und das zweite Profil, die ineinander greifen, die Bewegung des Mitnehmers (104) vollständig einschränken, während er in der ersten Position ist.

6. Fensterheberanordnung nach Anspruch 1, wobei eine oder mehrere Oberflächen (176) des Positionierelements (120), die gleitfähig mit dem Vorsprung (164) oder dem Mitnehmer (104) in Eingriff sind, scharf abfallend abgeschrägt sind.

7. Fensterheberanordnung nach einem der vorhergehenden Ansprüche, wobei das eine oder die mehreren Positionierelement(e) zum Absorbieren einer Kraft gestaltet sind, die zum Bilden der Einschnappverbindung zwischen der Fensterscheibe (106) und dem Mitnehmer (104) ausgeübt wird, und wobei die Fensterheberanordnung eine Glasscheibenversenkung von fast 100 % aufweist.

8. Türmodul (102) mit einer Fensterheberanordnung nach Anspruch 1.

9. Kraftfahrzeug (100) mit einer Fensterheberanordnung nach Anspruch 1.

10. Verfahren zum Einbauen einer Fensterscheibe (106) in eine Fensterheberanordnung nach Anspruch 1, das Folgendes aufweist:
- Positionieren eines Mitnehmers (104) für die Fensterscheibe (106) mithilfe einer Positioniereinrichtung (120) in einer Einbauposition zum Einbauen der Fensterscheibe (106), wobei die Positioniereinrichtung (120) aus wenigstens einem Positionierelement (120) besteht, wobei das Positionierelement (120) eine erste und eine zweite Position einnehmen kann, wobei das Positionierelement (120) in der ersten Position die Einbauposition definiert und das Positionierelement (120) in der zweiten Position eine Bewegung des Mitnehmers (104) zum Senken oder Heben einer eingebauten Fensterscheibe (106) freigibt, wobei das Positionierelement (120) in der ersten Position von einem Vorsprung (164), der sich aus dem Türelement (102) erstreckt, gestützt wird, wobei das Positionierelement gleitfähig zwischen dem Vorsprung (164) und dem Mitnehmer (104) in Eingriff ist, wobei das Positionierelement (120), das gleitfähig in Eingriff ist, durch eine Klammereinrichtung (174, 194) in der ersten Position gehalten wird und wobei das Positionierelement (120) durch das Türelement (102) eingebaut werden kann,
- Verbinden der Fensterscheibe (106) mit dem Mitnehmer (104) zu dem Zweck, eine Verbindung herzustellen, und
- Bewegen des Positionierelements (120) in die zweite Position, die von dem Türelement (102) vollständig entfernt ist.

11. Verfahren nach Anspruch 10, wobei die Verbindung eine Einschnappverbindung betrifft und eine Kraft auf die Fensterscheibe (106) ausgeübt wird, so dass der Mitnehmer (104) und die Fensterscheibe (106) miteinander verrasten.

12. Verfahren nach Anspruch 10 oder 11, wobei ein Antriebselement des Fensterhebers an dem Mitnehmer (104) montiert wird, bevor der Mitnehmer (104) mit der Fensterscheibe (106) verbunden wird.

13. Verfahren nach einem der Ansprüche 10 bis 12, wobei eines oder mehrere der Positionierelemente (120) in der ersten Position in einem Türelement (102) vormontiert sind, wobei eines oder mehrere der Positionierelemente (120) in die zweite Position gebracht werden, indem sie aus dem Türelement (102) entfernt und in eine Stauaufnahme gesetzt werden.

## Revendications

1. Agencement lève-vitre comprenant :
- un dispositif de levage (104) pour une vitre (106),
- un panneau de portière (102), et
- un moyen de positionnement (120) pour positionner le dispositif de levage (104) par rapport au panneau de portière (102) dans une position d'installation pour l'installation de la vitre (106),
le moyen de positionnement étant composé d'au moins un élément de positionnement (120), l'élément de positionnement (120) pouvant adopter une première et une seconde position, l'élément de positionnement (120) dans la première position définissant la position d'installation, l'élément de positionnement (120) dans la seconde position libérant un déplacement du dispositif de levage (104) pour ouvrir et fermer la vitre (106) installée, l'élément de positionnement (120), dans la position d'installation, étant agencé de manière amovible dans une zone médiane du panneau de portière (102) pour supporter le dispositif de levage (104) d'une manière telle que la vitre (106) fait saillie au-delà d'une garniture de portière supérieure (112), et l'élément de positionnement (120) étant complètement retiré du panneau de portière (102) dans la seconde position, et l'élément de positionnement (120) étant apte à être installé à travers le panneau de portière (102), ledit agencement lève-vitre étant **caractérisé par le fait que** l'élément de positionnement (120) est étayé dans la première position par une saillie (164) s'étendant hors du panneau de portière (102), l'élément de positionnement (120) étant engagé de manière coulissante entre la saillie (164) du panneau de portière (102) et le dispositif de levage (104), et l'élément de positionnement (120) étant maintenu dans la première position par un moyen de serrage (174, 194).

2. Agencement lève-vitre selon la revendication 1, dans lequel le ou les éléments de positionnement sont montés de manière mobile sur le panneau de portière (102) et sont conçus pour une fixation amovible du dispositif de levage (104) dans la première position.

3. Agencement lève-vitre selon l'une des revendications 1 ou 2, dans lequel l'élément de positionnement comprend un élément de contact (120) pour une fixation amovible.

4. Agencement lève-vitre selon l'une quelconque des revendications précédentes, dans lequel ledit élément de positionnement a une surface (172, 178) en contact avec une surface (166, 168, 170) du dispositif de levage (104) lorsqu'il est dans la première position, la surface (172, 178) de l'élément de positionnement (120) en contact avec le dispositif de levage (104) ayant un premier profil, la surface (166, 168, 170) du dispositif de levage (104) en contact avec l'élément de positionnement ayant un second profil, et les premier et second profils étant conçus pour s'interverrouiller automatiquement durant l'assemblage, et les premier et second profils d'interverrouillage restreignant le mouvement du dispositif de levage (104) lorsqu'il est dans la première position.

5. Agencement lève-vitre selon la revendication 4, dans lequel un câble (114) qui est conçu pour actionner le dispositif de levage (104) durant un fonctionnement normal agit en tant que second élément de positionnement lorsque le dispositif de levage (104) est dans la première position, et dans lequel le câble (114) et les premier et second profils d'interverrouillage restreignent complètement le mouvement du dispositif de levage (104) lorsqu'il est dans la première position.

6. Agencement lève-vitre selon la revendication 1, dans lequel une ou plusieurs surfaces (176) de l'élément de positionnement (120) qui sont engagées de manière coulissante avec l'un ou l'autre de la saillie (164) ou du dispositif de levage (104) s'éloignent rapidement par inclinaison.

7. Agencement lève-vitre selon l'une quelconque des revendications précédentes, dans lequel le ou les éléments de positionnement sont conçus pour absorber une force exercée pour former la liaison par encliquetage entre la vitre (106) et le dispositif de levage (104), et dans lequel l'agencement lève-vitre comprend une descente de vitre de presque 100 %.

8. Module de portière (102) comportant un agencement lève-vitre selon la revendication 1.

9. Portière de véhicule à moteur (100) comportant un agencement lève-vitre selon la revendication 1.

10. Procédé d'installation d'une vitre (106) dans un agencement lève-vitre selon la revendication 1, comprenant .
- le positionnement d'un dispositif de levage (104) pour la vitre (106) par un moyen de positionnement (120) dans une position d'installation pour l'installation de la vitre (106), le moyen de positionnement (120) étant composé d'au moins un élément de positionnement (120), l'élément de positionnement (120) pouvant adopter une première et une seconde position, l'élément de positionnement (120) dans la première position définissant la position d'installation et l'élément de positionnement (120) dans la seconde position pouvant libérer un déplacement du dispositif de levage (104) pour ouvrir ou fermer une vitre (106) installée, l'élément de positionnement (120) étant étayé dans la première position par une saillie (164) s'étendant hors du panneau de portière (102), l'élément de positionnement étant engagé de manière coulissante entre la saillie (164) et le dispositif de levage (104), l'élément de positionnement (120) qui est engagé de manière coulissante étant maintenu dans la première position par un moyen de serrage (174, 194), et l'élément de positionnement (120) étant apte à être installé à travers le panneau de portière (102),
- la liaison de la vitre (106) au dispositif de levage (104) dans le but de former une liaison, et
- le déplacement de l'élément de positionnement (120) dans la seconde position, complètement retiré du panneau de portière (102).

11. Procédé selon la revendication 10, dans lequel la liaison appartient à une liaison par encliquetage, et une force est exercée sur la vitre (106) de telle sorte que le dispositif de levage (104) et la vitre (106) se verrouillent ensemble par encliquetage.

12. Procédé selon l'une des revendications 10 ou 11, dans lequel un élément d'entraînement du lève-vitre est monté sur le dispositif de levage (104) avant que le dispositif de levage (104) ne soit relié à la vitre (106).

13. Procédé selon l'une quelconque des revendications 10 à 12, dans lequel un ou plusieurs des éléments de positionnement (120) sont préinstallés dans la première position dans un panneau de portière (102), un ou plusieurs des éléments de positionnement (120) étant placés dans la seconde position par retrait de ceux-ci du panneau de portière (102) et mise en place de ceux-ci dans un réceptacle de stockage.
